# EUROPÄISCHE PATENTSCHRIFT

(11) **EP 2 762 695 B1**
(45) Veröffentlichungstag und Bekanntmachung des Hinweises auf die Patenterteilung: **10.10.2018**
(21) Anmeldenummer: 14153157.4
(22) Anmeldetag: 30.01.2014
(51) Int. Cl.: F01N 5/02, F01N 3/04, F28D 7/02, F28D 21/00, F01N 3/02, F01N 13/18, F01N 13/16

(54) **Wärmetauscher einer Brennkraftmaschine**
Heat exchanger of an internal combustion engine
Échangeur de chaleur d'un moteur à combustion interne

(30) Priorität: 30.01.2013 DE 102013201465
(43) Veröffentlichungstag der Anmeldung: 06.08.2014
(73) Patentinhaber: Eberspächer Exhaust Technology GmbH & Co. KG, 66539 Neunkirchen (DE)
(72) Erfinder: Schweizer, Jürgen, 70197 Stuttgart (DE); Gaiser, Gerd, 72768 Reutlingen (DE); Birgler, Markus, 73249 Wernau (DE); Feuerbach, Matthias, 73734 Esslingen (DE); Penner, Dimitri, 73207 Plochingen (DE); Klingler, Christof, 73252 Lenningen (DE); Klein, Wolfgang, 71522 Backnang (DE)
(74) Vertreter: BRP Renaud & Partner mbB Rechtsanwälte Patentanwälte Steuerberater

(56) Entgegenhaltungen:
- EP-A1- 2 708 708
- WO-A1-2011/153179
- DE-A1-102009 030 789
- DE-A1-102010 039 281
- GB-A- 2 447 975
- US-A1- 2010 006 668
- US-B1- 6 702 190

## Beschreibung

Die vorliegende Erfindung betrifft einen Wärmetauscher für eine Brennkraftmaschine zur Wärmeübertragung zwischen einem Gasstrom und einem Arbeitsmediumstrom gemäß dem Oberbegriff des Anspruchs 1.

Bei Brennkraftmaschinen, insbesondere von Kraftfahrzeugen, kommen Wärmetauscher für vielfältige Anwendungen in Betracht. Beispielsweise kann in einen Motorkühlkreis ein Wärmetauscher eingebunden sein, der von Umgebungsluft durchströmbar ist, um Wärme aus dem Kühlkreis in die Umgebung abzuführen. Ferner kann ein thermisch mit dem Motorkühlkreis gekoppelter Wärmetauscher mit einem Innenraumluftstrom beaufschlagt werden, um auf diese Weise den Innenraumluftstrom zu beheizen. Des Weiteren sind Anwendungen denkbar, bei denen ein Wärmetauscher in eine Abgasanlage der Brennkraftmaschine eingebunden ist, um dem Abgas Wärme zu entziehen, beispielsweise um damit einen Fahrzeuginnenraum zu beheizen oder um damit in einem Abwärmenutzungskreis ein Arbeitsmedium zu verdampfen. Ebenso sind Ladeluftkühler sowie Abgasrückführkühler bekannt, bei denen ein Gasstrom mit Hilfe eines Arbeitsmediumstroms gekühlt wird.

Sofern der Wärmetauscher im Rahmen seiner jeweiligen Anwendung hohen Temperaturen und/oder großen Temperaturschwankungen ausgesetzt ist, ergeben sich daraus hohe thermische und mechanische Belastungen für den Wärmetauscher. Insbesondere für die Fälle, bei denen der Wärmetauscher gasseitig einem Abgasstrom bzw. einem Abgasrückführstrom ausgesetzt ist, ergeben sich hohe Anforderungen an die Dauerfestigkeit des Wärmetauschers. Auch sind Fahrzeuganwendungen hohen Belastungen durch Schwingungen und Erschütterungen ausgesetzt.

Ein gattungsgemäßer Wärmetauscher ist z.B. aus der WO 2011/153179 A1 bekannt. Er umfasst ein Gehäuse, das einen Gaspfad umschließt, und wenigstens ein, einen Arbeitsmediumpfad führendes Wendelrohr, das im Gaspfad angeordnet ist und das sich bezüglich einer Längsmittelachse des Gehäuses schraubenförmig erstreckt, wobei im Gehäuse ein Kernrohr angeordnet ist, das sich koaxial zur Längsmittelachse des Gehäuses erstreckt, wobei der Gaspfad radial zwischen dem Gehäuse und dem Kernrohr ausgebildet ist, so dass das wenigstens eine Wendelrohr zwischen dem Gehäuse und dem Kernrohr angeordnet ist, wobei das Kernrohr einen Bypasspfad umschließt, der den Gaspfad im Bereich des wenigstens einen Wendelrohrs umgeht, und wobei der Bypasspfad stromauf und stromab des wenigstens einen Wendelrohrs fluidisch mit dem Gaspfad verbunden ist, wobei das Kernrohr an beiden Längsenden des Gehäuses über das Gehäuse vorsteht und einen Gaseinlass und einen Gasauslass des Gehäuses bildet, wobei das Kernrohr eine Steuereinrichtung zum Steuern des durchströmbaren Querschnitts des Bypasspfads enthält. Beim bekanntenWärmetauscher ist das Kernrohr als Durchgangsrohr konzipiert, das sich unterbrechungsfrei von dem einen, den Gaseinlass bildenden Ende bis zum anderen, den Gasauslass bildenden Ende erstreckt.

Aus der US 6 702 190 B1 ist ein Wärmetauscher bekannt, bei dem das Kernrohr aus zwei Rohrstücken zusammengebaut ist. Ein anströmseitiges Rohrstück enthält die Steuereinrichtung, und ein abströmseitiges Rohrstück ist vom Wendelrohr umschlungen.

Die vorliegende Erfindung beschäftigt sich mit dem Problem, für einen Wärmetauscher der eingangs genannten Art eine verbesserte Ausführungsform anzugeben, die sich insbesondere durch eine hohe Dauerfestigkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Wärmetauscher, dessen Gehäuse einen Gaspfad umschließt, zumindest ein Wendelrohr über eine elastische äußere Lagerschicht am Gehäuse zu lagern. Ein derartiges Wendelrohr ist hierbei im Gaspfad angeordnet und erstreckt sich bezüglich einer Längsmittelachse des Gehäuses schraubenförmig. Ein Arbeitsmediumpfad ist durch das Wendelrohr geführt, wodurch sich über das im Gaspfad angeordnete Wendelrohr letztlich die Wärmeübertragung zwischen dem Gasstrom und dem Arbeitsmediumstrom ergibt. Die äußere Lagerschicht ist dabei radial zwischen dem Gehäuse und dem wenigstens einen Wendelrohr angeordnet. Zweckmäßig ist die äußere Lagerschicht dabei in der Umfangsrichtung vollständig umlaufend angeordnet. Durch die Verwendung eines Wendelrohrs lassen sich thermische Dehnungseffekte innerhalb des Wendelrohrs vergleichsweise einfach aufnehmen, da diese in erster Linie zu einer Längenänderung des Wendelrohrs führen und sich dadurch im Wesentlichen nur axial auswirken. Des Weiteren sorgt die äußere Lagerschicht dafür, dass auch radiale Dehnungseffekte elastisch aufgenommen werden können. Insoweit lässt sich die Dauerfestigkeit des Wärmetauschers entsprechend erhöhen.

Sofern die äußere Lagerschicht entsprechend einer vorteilhaften Ausführungsform im montierten Zustand zwischen dem Gehäuse und dem wenigstens einen Rohr radial verpresst ist, lässt sich die äußere Lagerschicht auch zur axialen Fixierung des Wendelrohrs relativ zum Gehäuse nutzen, wodurch andere Befestigungsmittel entlastet werden oder sogar entfallen können.

Erfindungsgemäß ist im vorzugsweise rohrförmigen Gehäuse ein Kernrohr angeordnet, das sich koaxial zur Längsmittelachse des Gehäuses erstreckt. Der Gaspfad ist radial zwischen dem Gehäuse und dem Kernrohr ausgebildet. Dementsprechend erstreckt sich auch das wenigstens eine Wendelrohr radial zwischen dem Gehäuse und dem Kernrohr. Das Kernrohr umschließt seinerseits einen Bypasspfad, der den Gaspfad im Bereich des wenigstens einen Wendelrohrs umgeht. Auf diese Weise werden im Wärmetauscher zwei parallel verlaufende Gaspfade ausgebildet, nämlich zum Einen der eigentliche Gaspfad zur Wärmekopplung mit dem Arbeitsmedium und zum Anderen der Bypasspfad zur Umgehung dieser Wärmekopplung. Für Betriebszustände, in denen eine Wärmekopplung zwischen Gasstrom und Arbeitsmediumstrom nicht erwünscht ist, kann somit der Gasstrom durch den Bypasspfad geführt werden, wodurch sich letztlich die thermische Belastung des jeweiligen Wendelrohrs reduziert. Der Bypasspfad ist erfindungsgemäß stromauf und stromab des wenigstens einen Wendelrohrs fluidisch mit dem Gaspfad verbunden. Dementsprechend erfolgt die fluidische Kopplung zwischen Gaspfad und Bypasspfad noch innerhalb des Gehäuses des Wärmetauschers.

Beispielsweise kann das Kernrohr für die jeweilige fluidische Kopplung mit dem Gaspfad eine Unterbrechung oder eine Perforation aufweisen. Dabei kann vorgesehen sein, dass bei der anströmseitigen Kopplung und bei der abströmseitigen Kopplung jeweils eine Unterbrechung oder jeweils eine Perforation vorgesehen ist. Ebenso ist denkbar, bei der einen Kopplung, vorzugsweise bei der anströmseitigen Kopplung, eine Perforation vorzusehen, während bei der anderen Kopplung, vorzugsweise bei der abströmseitigen Kopplung, eine Unterbrechung vorgesehen ist. Hierdurch ist das Kernrohr unterbrochen bzw. nicht mehr durchgängig ausgestaltet, wodurch sich Vorteile hinsichtlich thermisch bedingter Dehnungseffekte ergeben können. Beispielsweise kann sich so das Kernrohr ohne Verspannung relativ zum Gehäuse ausdehnen.

Bei einer anderen vorteilhaften Ausführungsform kann eine elastische innere Lagerschicht vorgesehen sein, die radial zwischen dem Kernrohr und dem wenigstens einen Wendelrohr angeordnet ist. Diese innere Lagerschicht kann insbesondere in der Umfangsrichtung vollständig umlaufend angeordnet sein. Über die innere Lagerschicht lässt sich das jeweilige Wendelrohr somit zusätzlich am Kernrohr abstützen, wobei auch hier die Elastizität der inneren Lagerschicht thermische Dehnungseffekte kompensieren kann. Gemäß einer vorteilhaften Ausführungsform kann die innere Lagerschicht zwischen dem Kernrohr und dem wenigstens einen Wendelrohr radial verpresst sein, wodurch die innere Lagerschicht zur Lagefixierung des Wendelrohrs relativ zum Kernrohr und somit innerhalb des Gehäuses genutzt werden kann.

Erfindungsgemäß enthält das Kernrohr eine Steuereinrichtung zum Steuern des durchströmbaren Querschnitts des Bypasspfads. Mit Hilfe einer derartigen Steuereinrichtung lässt sich der Gasstrom auf den Gaspfad im Ringraum zwischen Gehäuse und Kernrohr und auf den Bypasspfad quasi beliebig aufteilen. Bei einer einfachen Ausführungsform kann die Steuereinrichtung den durchströmbaren Querschnitt des Bypasspfads zumindest freigeben und sperren. Bei einer bevorzugten Ausführungsform ist jedoch wenigstens eine Zwischenstellung möglich. Insbesondere können mehrere oder beliebig viele Zwischenstellungen, insbesondere stufenlos, einstellbar sein, um eine quasi beliebige Strömungsaufteilung auf das Kernrohr und den Ringraum zu ermöglichen.

Erfindungsgemäß steht das Kernrohr an beiden Längsenden des Gehäuses über das Gehäuse vor und bildet einen Gaseinlass und einen Gasauslass des Gehäuses. Auf diese Weise kann das Einbinden des Wärmetauschers in eine den Gasstrom führende Leitung über den Gaseinlass und den Gasauslass, also über das Kernrohr erfolgen. In diesem Fall kann das Gehäuse vom Kernrohr getragen werden.

Erfindungsgemäß ist das Kernrohr axial aus drei Rohrabschnitten zusammengebaut, wobei ein Einlassabschnitt den Gaseinlass aufweist, ein Auslassabschnitt den Gasauslass aufweist und ein zwischen Einlassabschnitt und Auslassabschnitt angeordneter Steuerabschnitt die zuvor genannte Steuereinrichtung aufweist. Hierdurch ergibt sich ein besonders einfach realisierbarer Aufbau, der die Montage des Wärmetauschers erleichtert.

Bei einer anderen vorteilhaften Ausführungsform kann das wenigstens eine Wendelrohr mehrere Rippen aufweisen, die in den Gaspfad hineinragen. Derartige Rippen können beispielsweise in Form von ringförmigen Scheiben realisiert sein, von denen eine Vielzahl auf einem zentralen Rohrkörper des Wendelrohrs aufgesteckt sein kann. Alternativ dazu ist es ebenso möglich, die Rippen mit Hilfe eines Stegs zu realisieren, der sich schraubenförmig entlang des zentralen Rohrkörpers erstreckt. Mit Hilfe der Rippen wird die Wärmeübertragung zwischen Gas und Arbeitsmedium erheblich verbessert.

Bei einer anderen vorteilhaften Ausführungsform kann die jeweilige elastische Lagerschicht eine keramische Fasermatte oder ein Drahtgestrick oder ein Metallgestrick oder eine Quellmatte sein. Ebenso sind Verbundstrukturen denkbar. Die jeweilige Lagermatte kann einschichtig oder mehrschichtig ausgestaltet sein. Ebenso kann die jeweilige Lagermatte einteilig oder mehrteilig ausgestaltet sein.

Zweckmäßig ist die jeweilige Lagerschicht temperaturbeständig ausgestaltet.

Bei einer alternativen Ausführungsform kann die jeweilige Lagerschicht mit Federelementen und/oder Wellblechen und/oder durch eine federnde Blechschicht gebildet sein.

Bei einer anderen vorteilhaften Ausführungsform kann die jeweilige Lagerschicht zumindest an einer dem Gasstrom ausgesetzten Seite eine Stützlagerung aufweisen. Insbesondere kann somit die äußere Lagerschicht an ihrer dem Wendelrohr zugewandten Innenseite mit einer derartigen Stützlagerung ausgestattet sein. Zusätzlich oder alternativ kann die innere Lagerschicht an ihrer dem Wendelrohr zugewandten Außenseite mit einer derartigen Stützlagerung ausgestattet sein. Ebenso ist denkbar, dass die jeweilige Lagerschicht an ihrer Innenseite und an ihrer Außenseite mit einer derartigen Stützlagerung ausgestattet ist. Ferner kann die jeweilige Lagerschicht von einer derartigen Stützlagerung vollständig umhüllt sein. Die Stützlagerung kann die mechanische Festigkeit der Lagerschicht verbessern. Insbesondere kann die Stützlagerung die jeweilige Lagerschicht vor mechanischem Abrieb schützen.

Entsprechend einer vorteilhaften Weiterbildung kann die jeweilige Stützlagerung beispielsweise ein Drahtnetz oder eine Metallfolie oder eine hitzebeständige Webstruktur oder eine thermisch beständige Textilie oder ein Metallgeflecht oder ein Drahtgewebe sein. Ebenso sind Kombinationen der vorstehend genannten Ausführungsformen denkbar.

Bei einer anderen vorteilhaften Ausführungsform kann die Lagerschicht ein Fasermaterial aufweisen oder vollständig aus einem derartigen Fasermaterial bestehen. Die Stützlagerung ist dann zweckmäßig für die Fasern des Fasermaterials undurchlässig ausgestaltet. Durch diese Bauweise kann ein Austreten der Fasern aus der Lagerschicht vermieden werden, wodurch die Dauerhaltbarkeit der Lagerung verbessert wird.

Bei einer anderen vorteilhaften Ausführungsform kann die jeweilige Lagerschicht als Lagermatte ausgestaltet sein, die in der Umfangsrichtung geschlossen umläuft. Eine derartige Lagermatte zeichnet sich dadurch aus, dass sie eine radiale Verpressung ermöglicht, die beispielsweise für eine Lagefixierung des jeweiligen Wendelrohrs relativ zum Gehäuse bzw. relativ zum Kernrohr verwendet werden kann. Eine derartige Verpressung kann mittels einer solchen Lagermatte auch bei hohen Temperaturen dauerhaft aufrechterhalten werden, wobei gleichzeitig eine hinreichende Elastizität vorliegt, um thermische Dehnungseffekte, reversibel kompensieren zu können. Derartige Lagermatten kommen beispielsweise zur Lagefixierung von keramischen Monolithen in metallischen, zylindrischen Gehäusen von Katalysatoren oder Partikelfiltern zum Einsatz.

Bei einer anderen vorteilhaften Ausführungsform kann die jeweilige Lagerschicht radial innen und radial außen mit dem jeweils benachbarten Element in Kontakt stehen. Zusätzlich kann die jeweilige Lagerschicht radial verpresst sein.

Die jeweilige Lagerschicht kann außerdem so ausgestaltet sein, dass sie gleichzeitig eine thermische Isolation herbeiführt. Die äußere Lagerschicht bewirkt dabei eine thermische Isolation des Gehäuses gegenüber dem Gasstrom. Die innere Lagerschicht bewirkt eine thermische Isolation des Kernrohrs, so dass im Bypassbetrieb die Wärmeabstrahlung nach außen reduziert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine,
- Fig. 2: einen Längsschnitt eines Wärmetauschers,
- Fig. 3: eine isometrische, auseinander gezogene Darstellung des Wärmetauschers,
- Fig. 4: eine isometrische Schnittansicht des Wärmetauschers, jedoch bei einer anderen Ausführungsform.

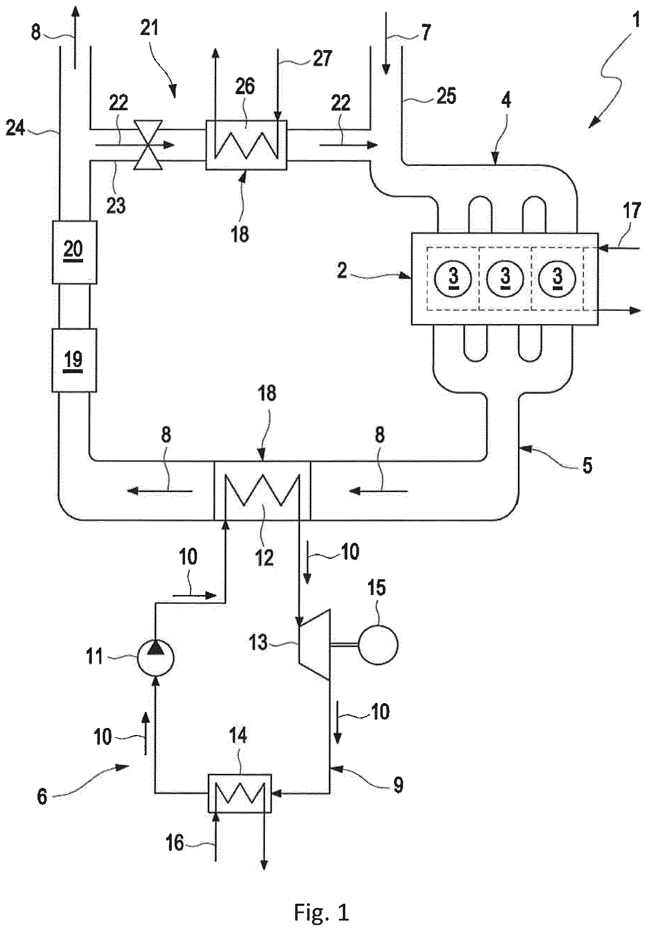

Entsprechend Figur 1 umfasst eine Brennkraftmaschine 1 in üblicher Weise einen Motorblock 2 mit mehreren Brennräumen 3, eine Frischluftanlage 4 zum Zuführen von Frischluft zu den Brennräumen 3, eine Abgasanlage 5 zum Abführen von Abgas von den Brennräumen 3 und eine Abwärmenutzungsanlage 6 zum Nutzen der im Abgas mitgeführten Wärme. Ein in der Frischluftanlage 4 geführter Frischluftstrom 7 ist durch einen Pfeil angedeutet. Ein in der Abgasanlage 5 geführter Abgasstrom 8 ist durch Pfeile angedeutet. Die Abwärmenutzungsanlage 6 umfasst einen Abwärmenutzungskreis 9, in dem ein Arbeitsmedium zirkuliert, wobei ein Arbeitsmediumstrom 10 durch Pfeile angedeutet ist. Im Abwärmnutzungskreis 9 sind in der Strömungsrichtung des Arbeitsmediums 10 hintereinander eine Fördereinrichtung 11 zum Antreiben des Arbeitsmediums, ein Verdampfer 12 zum Verdampfen des Arbeitsmediums, eine Expansionsmaschine 13 zum Expandieren des Arbeitsmediums und ein Kondensator 14 zum Kondensieren des Arbeitsmediums angeordnet. Die Expansionsmaschine 13 kann beispielsweise einen Generator 15 zur Stromerzeugung antreiben. Der Kondensator 14 kann in einen Kühlkreis 16 eingebunden sein, der mit einem Motorkühlkreis 17 zum Kühlen des Motorblocks 2 fluidisch und/oder thermisch gekoppelt sein kann. Insbesondere kann der Kühlkreis 16 durch einen Zweig des Motorkühlkreises 17 gebildet sein. Der Verdampfer 12 ist durch einen Wärmetauscher 18 gebildet, der in die Abgasanlage 5 auf geeignete Weise eingebaut ist. Der Wärmetauscher 18 dient somit in der Abgasanlage 5 zur Wärmeübertragung zwischen dem Abgasstrom 8 und dem Arbeitsmediumstrom 10. Die Abwärmenutzungsanlage 6 kann bevorzugt nach dem Prinzip eines Clausius-Rankine-Kreisprozess arbeiten. Die Abgasanlage 5 kann außerdem in üblicher Weise zumindest eine Abgasnachbehandlungseinrichtung 19, wie zum Beispiel ein Katalysator oder ein Partikelfilter, sowie wenigstens einen Schalldämpfer 20 enthalten.

Die in Figur 1 rein exemplarisch wiedergegebene Brennkraftmaschine 1 weist außerdem eine Abgasrückführanlage 21 auf, mit deren Hilfe Abgas von der Abgasanlage 5 zur Frischluftanlage 4 rückgeführt werden kann. Ein entsprechender Abgasrückführstrom ist in Figur 1 durch Pfeile angedeutet und mit 22 bezeichnet.

In einer hierzu vorgesehenen Abgasrückführleitung 23, die eine Abgasleitung 24 fluidisch mit einer Frischluftleitung 25 verbindet, kann ein Abgasrückführkühler 26 angeordnet sein, mit dessen Hilfe das rückgeführte Abgas gekühlt werden kann. Der Abgasrückführkühler 26 kann hierzu in einen Kühlkreis 27 eingebunden sein, der ebenfalls durch einen Zweig des Motorkühlkreises 17 oder durch einen separaten Kühlkreis gebildet sein kann. Auch beim Abgasrückführkühler 26 handelt es sich um einen Wärmetauscher 18.

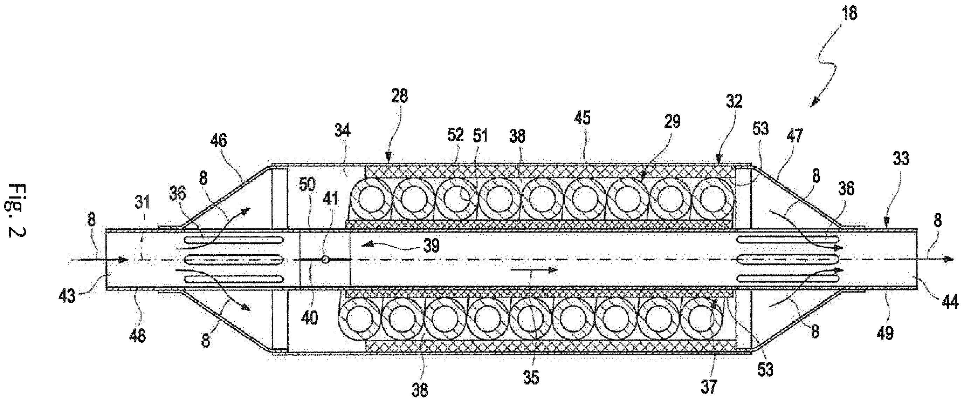

Nachfolgend wird mit Bezug auf die Figuren 2 bis 4 der Aufbau eines derartigen Wärmetauschers 18 näher erläutert, der grundsätzlich beliebig verwendbar ist, vorzugsweise jedoch als Verdampfer 12 oder als Abgasrückführkühler 26 verwendet werden kann.

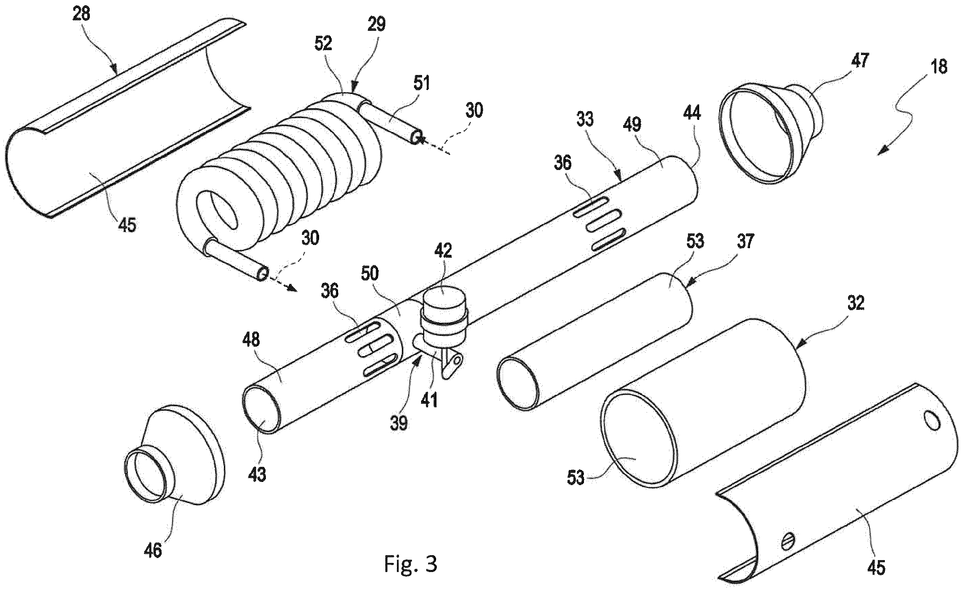

Entsprechend den Figuren 2 bis 4 umfasst der Wärmetauscher 18 ein Gehäuse 28, das einen Gaspfad 38 in der Umfangsrichtung umschließt. Das Gehäuse 28 ist beispielsweise zylindrisch ausgestaltet und kann gemäß Figur 3 aus zwei Halbschalen bestehen. Ferner umfasst der Wärmetauscher 18 zumindest ein Wendelrohr 29, das in seinem Inneren einen Arbeitsmediumpfad 30 enthält, so dass das Arbeitsmedium durch das Wendelrohr 29 geführt ist. Das Wendelrohr 29 ist im Gaspfad 38 angeordnet und erstreckt sich bezüglich einer Längsmittelachse 31 des Gehäuses 28 schraubenfömig.

Radial zwischen dem Gehäuse 28 und dem Wendelrohr 29 ist eine elastische äußere Lagerschicht 32 angeordnet.

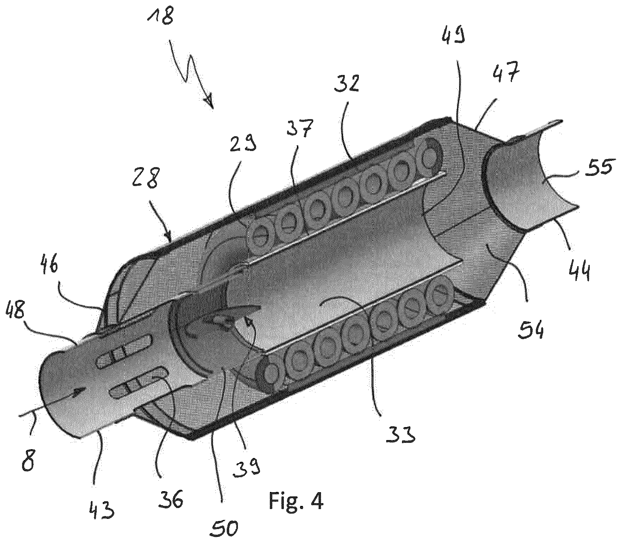

Im Gehäuse 28 ist außerdem ein Kernrohr 33 angeordnet, derart, dass es sich koaxial zur Längsmittelachse 31 des rohrförmigen Gehäuses 28 erstreckt. Radial zwischen dem Kernrohr 33 und dem Gehäuse 28 ist dadurch ein Ringraum 34 ausgebildet. Der Gaspfad 38 befindet sich nun in diesem Ringraum 34. Das Wendelrohr 29 befindet sich ebenfalls in diesem Ringraum 34, also radial zwischen dem Gehäuse 28 und dem Kernrohr 33. Das Kernrohr 33 umschließt einen Bypasspfad 35, der den Gaspfad 38 im Bereich des Wendelrohrs 29 umgeht. Das Kernrohr 33 ist stromauf und stromab des Wendelrohrs 29 fluidisch mit dem Gaspfad 38 verbunden. Im Beispiel der Figuren 2 und 3 wird dies jeweils mittels einer Perforation 36 realisiert, die im Kernrohr 33 ausgebildet ist. Beispielsweise umfasst die Perforation 36 mehrere axial orientierte Langlöcher oder Schlitze, die in der Umfangsrichtung verteilt angeordnet sind. Mit Hilfe einer derartigen Perforation muss das Kernrohr 33 im Bereich der fluidischen Verbindung zwischen Bypasspfad 35 und Abgaspfad 38 nicht unterbrochen werden. Somit ist es insbesondere gemäß dem Beispiel der Figuren 2 und 3 möglich, das Kernrohr 33 als durchgängiges Rohr zu konzipieren. Alternativ zu derartigen Perforationen 36 ist grundsätzlich auch eine in Fig. 4 erkennbare Unterbrechung 54 des Kernrohrs 33 denkbar, um die jeweilige fluidische Verbindung zwischen dem Gaspfad 38 und dem Bypasspfad 35 zu schaffen. Im Beispiel der Fig. 4 ist die eine fluidische Kopplung, hier die anströmseitige Auskopplung oder Strömungsteilung, mittels der Perforation 36 realisiert, während die andere fluidische Kopplung, hier die abströmseitige Einkopplung oder Strömungsvereinigung, mittels der Unterbrechung 54 realisiert ist. Es ist klar, dass auch eine umgekehrte Anordnung von Perforation 36 und Unterbrechung 54 möglich ist. Ebenso ist denkbar, bei einer anderen Ausführungsform beide Kopplungen jeweils durch ein solche Unterbrechung 54 darzustellen.

Gemäß den Figuren 2 bis 4 ist radial zwischen dem Kernrohr 33 und dem Wendelrohr 29 eine elastische innere Lagerschicht 37 angeordnet.

Im Kernrohr 33 ist ferner eine Steuereinrichtung 39 angeordnet, mit deren Hilfe der durchströmbare Querschnitt des Bypasspfads 35 gesteuert werden kann. Die Steuereinrichtung 39 ist hier als Schmetterlingsklappe 40 konzipiert, die mit Hilfe einer Antriebswelle 41 drehend betätigbar ist. Die Antriebswelle 41 erstreckt sich dabei quer zur Längsmittelachse 31 etwa mittig durch das Kernrohr 33 und kann außerhalb des Kernrohrs 33 und vorzugsweise außerhalb des Gehäuses 28 mit einem Stellantrieb 42 antriebsverbunden sein.

Das Kernrohr 33 ist beim Beispiel der Figuren 2 und 3 an beiden Längsenden des Gehäuses 28 über das Gehäuse 28 vorstehend angeordnet, so dass das Kernrohr 33 einen Gaseinlass 43 und einen Gasauslass 44 des Gehäuses 28 bildet. Im Beispiel der Fig. 4 steht das nicht durchgängige, sondern unterbrochene Kernrohr 33 nur an einem Ende, hier am Einlassende, axial über das Gehäuse 28 vor, so dass das Kernrohr 33 hier nur den Gaseinlass 43 bildet. Der Gasauslass 44 ist in diesem Fall durch das Gehäuse 28 selbst oder durch ein weiters Rohrstück 55 gebildet. Das Gehäuse 28 umfasst neben einem zylindrischen Rohrkörper 45 außerdem einen Einlasstrichter 46 und einen Auslasstrichter 47. Der Einlasstrichter 46 verbindet das Kernrohr 33 im Bereich des Gaseinlasses 43 mit dem Rohrkörper 45. Im Bereich des Einlasstrichters 46 befindet sich die anströmseitige Perforation 36. Der Auslasstrichter 47 verbindet bei der in den Fig. 2 und 3 gezeigten Ausführungsform den Rohrkörper 45 mit dem Kernrohr 33 im Bereich des Gasauslasses 44. Im Bereich des Auslasstrichters 47 befindet sich die abströmseitige Perforation 36. Bei der in Fig. 4 gezeigten Ausführungsform ist dagegen der Auslasstrichter 47 mit dem Rohrstück 55 verbunden, wobei im Bereich des Auslasstrichters 47 die Unterbrechung 54 angeordnet ist.

Im Beispiel der Fig. 2 bis 4 ist das Kernrohr 33 aus drei axialen Rohrabschnitten zusammengebaut, nämlich aus einem Einlassabschnitt 48, einem Auslassabschnitt 49 und einem Steuerabschnitt 50. Der Einlassabschnitt 48 weist den Gaseinlass 43 und die anströmseitige Perforation 36 auf. Der Auslassabschnitt 49 weist bei der in den Fig. 2 und 3 gezeigten Ausführungsform den Gasauslass 44 und die abströmseitige Perforation 36 auf, während er bei der in Fig. 4 gezeigten Ausführungsform an der Unterbrechung 54 im Innneren des Gehäuses 28 freistehend endet. Der Steuerabschnitt 50 weist die Steuereinrichtung 39 auf und ist axial zwischen dem Einlassabschnitt 48 und dem Auslassabschnitt 49 angeordnet.

Das Wendelrohr 29 besitzt einen schraubenförmig gewendelten Rohrkörper 51, der an seiner Außenseite eine Vielzahl von Rippen 52 trägt. Die Rippen 52 ragen somit in den Gaspfad 38 hinein.

Die Lagerschichten 32, 37 können jeweils aus einem hitzebeständigen und dauerhaft elastischen Material hergestellt sein. Hierzu kommen unterschiedliche Materialien in Betracht, insbesondere Fasermaterialien. Insbesondere kann es sich bei der jeweiligen Lagerschicht 32, 37 um eine Lagermatte handeln, die in der Umfangsrichtung geschlossen umläuft. In Figur 3 sind die beiden Lagerschichten 32, 37 als derartige in der Umfangsrichtung geschlossen umlaufende Lagermatten dargestellt. Im montierten Zustand gemäß Figur 2 kommt es zu einem Kontakt zwischen dem Wendelrohr 29 bzw. dessen Rippen 52 und den beiden Lagerschichten 32, 37. Ferner steht die äußere Lagerschicht 32 mit dem Gehäuse 28 in Kontakt, während die innere Lagerschicht 37 mit dem Kernrohr 33 in Kontakt steht. Vorzugsweise erfolgt die Montage derart, dass die Lagermatten 32, 37 radial verpresst sind, also eine gewisse Vorspannung radial zwischen dem Wendelrohr 29 und dem Kernrohr 33 einerseits und dem Gehäuse 28 andererseits erzeugen.

Entsprechend einer vorteilhaften Ausführungsform kann gemäß Figur 3 die innere Lagerschicht 37 zumindest an ihrer dem Wendelrohr 29 zugewandten Außenseite mit einer Stützlagerung 53 ausgestattet sein. Zusätzlich oder alternativ kann die äußere Lagerschicht 32 zumindest an ihrer dem Wendelrohr 29 zugewandten Innenseite mit einer Stützlagerung 53 ausgestattet sein. Die jeweilige Stützlagerung 53 charakterisiert sich dadurch, dass sie eine höhere mechanische Festigkeit besitzt als die damit ausgestattete Lagerschicht 32, 37.

## Patentansprüche

1. Wärmetauscher für eine Brennkraftmaschine (1) zur Wärmeübertragung zwischen einem Gasstrom (8) und einem Arbeitsmediumstrom (10),
- mit einem Gehäuse (28), das einen Gaspfad (38) umschließt,
- mit wenigstens einem, einen Arbeitsmediumpfad (30) führenden Wendelrohr (29), das im Gaspfad (38) angeordnet ist und das sich bezüglich einer Längsmittelachse (31) des Gehäuses (28) schraubenförmig erstreckt,
- wobei im Gehäuse (28) ein Kernrohr (33) angeordnet ist, das sich koaxial zur Längsmittelachse (31) des Gehäuses (28) erstreckt,
- wobei der Gaspfad (38) radial zwischen dem Gehäuse (28) und dem Kernrohr (33) ausgebildet ist, so dass das wenigstens eine Wendelrohr (29) zwischen dem Gehäuse (28) und dem Kernrohr (33) angeordnet ist,
- wobei das Kernrohr (33) einen Bypasspfad (35) umschließt, der den Gaspfad (38) im Bereich des wenigstens einen Wendelrohrs (29) umgeht, und wobei der Bypasspfad (35) stromauf und stromab des wenigstens einen Wendelrohrs (29) fluidisch mit dem Gaspfad (38) verbunden ist,
- wobei das Kernrohr (33) an beiden Längsenden des Gehäuses (28) über das Gehäuse (28) vorsteht und einen Gaseinlass (43) und einen Gasauslass (44) des Gehäuses (28) bildet,
- wobei das Kernrohr (33) eine Steuereinrichtung (39) zum Steuern des durchströmbaren Querschnitts des Bypasspfads (35) enthält,
**dadurch gekennzeichnet,**
- **dass** eine elastische äußere Lagerschicht (32) zwischen dem Gehäuse (28) und dem wenigstens einen Wendelrohr (29) angeordnet ist,
- **dass** das Kernrohr (33) axial aus drei Rohrabschnitten zusammengebaut ist, wobei ein Einlassabschnitt (48) den Gaseinlass (43) aufweist, ein Auslassabschnitt (49) den Gasauslass (44) aufweist und ein Steuerabschnitt (50) die Steuereinrichtung (39) aufweist.

2. Wärmetauscher nach Anspruch 1,
**dadurch gekennzeichnet,**
**dass** das Kernrohr (33) für die jeweilige fluidische Kopplung mit dem Gaspfad (38) bei der einen Kopplung eine Perforation (36) und bei der anderen Kopplung eine Unterbrechung (54) aufweist.

3. Wärmetauscher nach Anspruch 2,
**dadurch gekennzeichnet,**
**dass** die Perforation (36) am Einlassabschnitt (48) ausgebildet ist, während die Unterbrechung (54) am Auslassabschnitt (49) ausgebildet ist.

4. Wärmetauscher nach einem der Ansprüche 1 bis 3,
**gekennzeichnet durch** eine elastische innere Lagerschicht (37), die zwischen dem Kernrohr (33) und dem wenigstens einen Wendelrohr (29) angeordnet ist.

5. Wärmetauscher nach einem der Ansprüche 1 bis 4,
**dadurch gekennzeichnet,**
**dass** das wenigstens eine Wendelrohr (29) mehrere Rippen (52) aufweist, die in den Gaspfad (38) hineinragen.

6. Wärmetauscher nach einem der Ansprüche 1 bis 5,
**dadurch gekennzeichnet,**
**dass** die jeweilige Lagerschicht (32, 37) zumindest an einer dem Gasstrom ausgesetzten Seite eine Stützlagerung (53) aufweist.

7. Wärmetauscher nach Anspruch 6,
**dadurch gekennzeichnet,**
**dass** die Lagerschicht (32, 37) ein Fasermaterial aufweist, wobei die Stützlagerung (53) für die Fasern des Fasermaterials undurchlässig ausgestaltet ist.

8. Wärmetauscher nach einem der Ansprüche 1 bis 7,
**dadurch gekennzeichnet,**
**dass** die jeweilige Lagerschicht (32, 37) als Lagermatte ausgestaltet ist, die in der Umfangsrichtung geschlossen umläuft.

9. Wärmetauscher nach einem der Ansprüche 1 bis 8,
**dadurch gekennzeichnet,**
**dass** die jeweilige Lagerschicht (32, 37) radial innen und radial außen mit dem jeweils benachbarten Element (28, 29, 33) in Kontakt steht.

10. Wärmetauscher nach einem der Ansprüche 1 bis 9,
**dadurch gekennzeichnet,**
**dass** die jeweilige Lagerschicht (32, 37) radial verpresst ist.

## Claims

1. A heat exchanger for an internal combustion engine (1) for the heat transfer between a gas stream (8) and a working medium stream (10),
- with a housing (28) which encloses a gas path (38),
- with at least one coiled tube (29) conducting a working medium path (30), which is arranged in the gas path (38) and which with respect to a longitudinal centre axis (31) of the housing (28) extends helically,
- wherein in the housing (28) a core tube (33) is arranged, which extends coaxially to the longitudinal centre axis (31) of the housing (28),
- wherein the gas path (38) is radially formed between the housing (28) and the core tube (33), so that the at least one coiled tube (29) is arranged between the housing (28) and the core tube (33),
- wherein the core tube (33) encloses a bypass path (35), which bypasses the gas path (38) in the region of the at least one coiled tube (29),
- wherein the bypass path (35) is fluidically connected to the gas path (38) upstream and downstream of the at least one coiled tube (29),
- wherein the core tube (33) protrudes over the housing (28) on both longitudinal ends of the housing (28) and forms a gas inlet (43) and a gas outlet (44) of the housing (28),
- wherein the core tube (33) contains a control device (39) for controlling the throughflow-capable cross section of the bypass path (35),
**characterized in**
- **that** an elastic outer bearing layer (32) is arranged between the housing (28) and the at least one coiled tube (29),
- **that** the core tube (33) is axially assembled from three tube sections, wherein an inlet section (48) comprises the gas inlet (43), an outlet section (49) comprises the gas outlet (44) and a control section (50) comprises the control device (39).

2. The heat exchanger according to Claim 1,
**characterized in**
**that** the core tube (33) comprises for the respective fluidic coupling with the gas path (38) at the one coupling a perforation (36) and at the other coupling an interruption (54).

3. The heat exchanger according to claim 2,
**characterized in**
**that** the perforation (36) is formed at the inlet section (48), while the interruption (54) is formed at the outlet section (49).

4. The heat exchanger according to any one of Claims 1 to 3,
**characterized by**
an elastic inner bearing layer (37), which is arranged between the core tube (33) and the at least one coiled tube (29).

5. The heat exchanger according to any one of the Claims 1 to 4,
**characterized in**
**that** the at least one coiled tube (29) comprises a plurality of fins (52), which project into the gas path (38).

6. The heat exchanger according to any one of the Claims 1 to 5,
**characterized in**
**that** the respective bearing layer (32, 37) comprises a support mounting (53) at least on a side exposed to the gas stream.

7. The heat exchanger according to Claim 6,
**characterized in**
**that** the bearing layer (32, 37) comprises a fibre material, wherein the support mounting (53) is configured impermeable to the fibres of the fibre material.

8. The heat exchanger according to any one of the Claims 1 to 7,
**characterized in**
**that** the respective bearing layer (32, 37) is configured as bearing mat which runs about closed in the circumferential direction.

9. The heat exchanger according to any one of the Claims 1 to 8,
**characterized in**
**that** the respective bearing layer (32, 37) is in contact with the respective neighbouring element (28, 29, 33) radially inside and radially outside.

10. The heat exchanger according to any one of the Claims 1 to 9,
**characterized in**
**that** the respective bearing layer (32, 37) is radially compressed.

## Revendications

1. Echangeur de chaleur pour un moteur à combustion interne (1) pour la transmission de chaleur entre un courant gazeux (8) et un courant de fluide de travail (10),
- avec un boîtier (28) qui entoure une voie de gaz (38),
- avec au moins un tube hélicoïdal (29) menant une voie de fluide de travail (30) qui est disposé dans la voie de gaz (38) et qui s'étend de manière hélicoïdale par rapport à un axe médian longitudinal (31) du boîtier (28),
- dans lequel un tube central (33) est disposé dans le boîtier (28), lequel s'étend coaxialement à l'axe médian longitudinal (31) du boîtier (28),
- dans lequel la voie de gaz (38) est réalisée radialement entre le boîtier (28) et le tube central (33) de sorte que l'au moins un tube hélicoïdal (29) soit disposé entre le boîtier (28) et le tube central (33),
- dans lequel le tube central (33) entoure une voie de dérivation (35) qui contourne la voie de gaz (38) dans la zone de l'au moins un tube hélicoïdal (29), et dans lequel la voie de dérivation (35) est raccordée en amont et en aval de l'au moins un tube hélicoïdal (29) fluidiquement à la voie de gaz (38),
- dans lequel le tube central (33) dépasse du boîtier (28) au niveau des deux extrémités longitudinales du boîtier (28) et forme une entrée de gaz (43) et une sortie de gaz (44) du boîtier (28),
- dans lequel le tube central (33) contient un dispositif de commande (39) pour la commande de la section transversale traversable de la voie de dérivation (35),
**caractérisé en ce**
- **qu'**une couche de palier extérieure (32) élastique est disposée entre le boîtier (28) et l'au moins un tube hélicoïdal (29),
- **que** le tube central (33) est composé axialement de trois sections de tube, dans lequel une section d'entrée (48) présente l'entrée de gaz (43), une section de sortie (49) présente la sortie de gaz (44) et une section de commande (50) présente le dispositif de commande (39).

2. Echangeur de chaleur selon la revendication 1,
**caractérisé en ce**
**que** le tube central (33) présente pour le couplage fluidique respectif avec la voie de gaz (38) pour l'un couplage une perforation (36) et pour l'autre couplage une interruption (54).

3. Echangeur de chaleur selon la revendication 2,
**caractérisé en ce**
**que** la perforation (36) est réalisée au niveau de la section d'entrée (48) alors que l'interruption (54) est réalisée au niveau de la section de sortie (49).

4. Echangeur de chaleur selon l'une quelconque des revendications 1 à 3,
**caractérisé par** une couche de palier intérieure (37) élastique qui est disposée entre le tube central (33) et l'au moins un tube hélicoïdal (29).

5. Echangeur de chaleur selon l'une quelconque des revendications 1 à 4,
**caractérisé en ce**
**que** l'au moins un tube hélicoïdal (29) présente plusieurs nervures (52) qui pénètrent dans la voie de gaz (38).

6. Echangeur de chaleur selon l'une quelconque des revendications 1 à 5,
**caractérisé en ce**
**que** la couche de palier (32, 37) respective présente au moins au niveau d'un côté exposé au courant de gaz un logement d'appui (53).

7. Echangeur de chaleur selon la revendication 6,
**caractérisé en ce**
**que** la couche de palier (32, 37) présente un matériau de fibre, dans lequel le logement d'appui (53) est configuré de manière imperméable pour les fibres du matériau de fibre.

8. Echangeur de chaleur selon l'une quelconque des revendications 1 à 7,
**caractérisé en ce**
**que** la couche de palier (32, 37) respective est configurée en tant que natte de palier qui tourne fermée dans le sens périphérique.

9. Echangeur de chaleur selon l'une quelconque des revendications 1 à 8,
**caractérisé en ce**
**que** la couche de palier (32, 37) respective est en contact radialement intérieur et radialement extérieur avec l'élément (28, 29, 33) adjacent respectivement.

10. Echangeur de chaleur selon l'une quelconque des revendications 1 à 9,
**caractérisé en ce**
**que** la couche de palier (32, 37) respective est pressée radialement.
